(19) Europäisches Patentamt / European Patent Office / Office européen des brevets

(11) **EP 3 444 287 A1**

(12) **EUROPÄISCHE PATENTANMELDUNG**

(43) Veröffentlichungstag:
**20.02.2019 Patentblatt 2019/08**

(21) Anmeldenummer: **17186298.0**

(22) Anmeldetag: **15.08.2017**

(51) Int Cl.:
**C08G 18/48** (2006.01)   **C08G 18/76** (2006.01)
**C08G 18/20** (2006.01)   **C08G 18/30** (2006.01)
**C08G 18/32** (2006.01)   **C08G 101/00** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **DÄMMKÖRPER, INSBESONDERE DÄMMKÖRPER ZUR ZWISCHENSPARRENDÄMMUNG**

(57) Die Erfindung betrifft einen Formkörper umfassend ein Hartschaum-Granulat und eine Weichschaum-Matrix, wobei der Formkörper eine Wärmeleitfähigkeit von 0,020 bis 0,035 W/(m*K) aufweist. Ferner betrifft die Erfindung zwei Verfahren zur Herstellung solch eines Formkörpers und dessen Verwendung zur thermischen Isolation.

EP 3 444 287 A1

**Beschreibung**

Die Erfindung betrifft einen Formkörper, umfassend ein Hartschaum-Granulat und eine Weichschaum-Matrix, wobei der Formkörper eine Wärmeleitfähigkeit von 0,020 bis 0,035 W/(m*K) aufweist. Ferner betrifft die Erfindung zwei Verfahren zur Herstellung solch eines Formkörpers und dessen Verwendung zur thermischen Isolation.

Um Dächer, insbesondere Schrägdächer zu dämmen, existieren verschiedene Möglichkeiten im Stand der Technik. Das Dämmmaterial kann dabei entweder über, unter oder zwischen den Sparren angebracht werden. Während über und unter den Sparren bereits mit Polyurethan gedämmt werden kann, ist die Zwischensparrendämmung, im Folgenden auch als ZSD bezeichnet, bisher fast ausschließlich auf die Verwendung von Mineralwolle und Holzfaserdämmplatte beschränkt. Der Grund dafür ist, dass das Dämmmaterial zwischen die Sparren geklemmt werden muss. Dafür ist eine gewisse Flexibilität und Kompressibilität des Dämmmaterials notwendig, auch da der Abstand der Sparren nicht einheitlich ist und diese nicht unbedingt exakt parallel verlaufen. Da der Dämmwert von Mineralwolle zu gering ist, um durch eine Dämmung nur zwischen den üblicherweise verbauten Sparren die mittlerweile notwendigen Wärmedurchlasskoeffizienten von Dachflächen zu erreichen, wird bisher die ZSD mit anderen Dämmarten kombiniert oder die Sparrentiefe durch zusätzliches Holz erhöht.

Bessere Dämmwerte als Mineralwolle oder Holzfasern könnten Dämmplatten aus geschlossenzelligem Hartschaum, wie Polyurethan, liefern. Eine Dämmung mit solchen Materialien würde geringere Dicken des Dämmmaterials erfordern, sodass eine Dämmung nur zwischen den Sparren möglich wäre. Allerdings sind Polyurethan-Dämmplatten und andere Dämmplatten aus Hartschaum sehr starr, sodass eine einfache Verwendung für die ZSD nur schwer oder sogar meist unmöglich ist.

Daneben existieren noch weitere Märkte, in denen bevorzugt flexible Materialen zur Isolation eingesetzt werden. Exemplarisch sei hier die Dämmung von Hohlräumen, zum Beispiel an Wänden oder die Isolierung von runden Körpern wie Warmwassertanks genannt.

Auch hier wäre eine Dämmung mit Dämmplatten aus geschlossenzelligem Hartschaum vorteilhaft, jedoch ist auch hier durch die Starrheit des Hartschaums die Dämmung von gewölbten Flächen nur schwer oder sogar meist unmöglich ist.

Um die Flexibilität von klassischen Polyurethandämmplatten zu erhöhen wurde zum Beispiel in der DE 10 2015 103 573 A1 eine Polyurethanhartschaumplatte mit Schlitzen beschrieben. Der Nachteil ist dabei, dass die Flexibilität der Platte nur in eine Dimension gegeben ist und an der Dämmplatte eine Dampfbremsfolie angebracht ist, die benötigt wird, um die nur wenig flexible Dämmplatte durch Selbstklebestreifen oder weitere Verklebungen in den Sparren zu befestigen. Die Verwendung solcher Platten ist somit auf einen gegebenen Sparrenabstand limitiert.

Die Aufgabe der vorliegenden Erfindung war es daher ein Isolationsmaterial zu entwickeln, welches Dämmwerte ähnlich von klassischen Polyurethandämmplatten, zumindest jedoch besser als Mineralwolle, aufweist, und zudem eine hinreichende Flexibilität und Kompressibilität besitzt, um in den vorstehend genannten Gebieten eingesetzt zu werden, beziehungsweise um die ZSD zu vereinfachen. Eine weitere Aufgabe bestand darin Isolationsmaterial wie vorstehend beschrieben zu entwickeln, welches zudem in alle Raumrichtungen flexibel ist und/oder keine weiteren Hilfsmittel zur Fixierung benötigt.

Diese Aufgabe wurde gelöst durch einen Formkörper, der sowohl ein Hartschaum-Granulat als auch eine Weichschaum-Matrix umfasst und zudem eine Wärmeleitfähigkeit von 0,020 bis 0,035 W/(m*K) aufweist. Insbesondere ist der Formkörper auf Polyurethanbasis. Der Formkörper besitzt überraschenderweise gleichzeitig eine bessere Flexi-bilität als Polyurethan-Hartschaum und einen besseren Dämmwert als etablierte flexible Dämmstoffe, wie Mineralwolle, Polyethylen-Schaumstoff, konventioneller Polyurethan-Weichschaum oder Holzfaserdämmplatten.

Insbesondere betrifft die Erfindung die folgenden Ausführungsformen:

Nach einer ersten Ausführungsform betrifft die Erfindung einen Formkörper, umfassend oder bestehend aus

A) einem Hartschaum-Granulat; und
B) einer Weichschaum-Matrix,

dadurch gekennzeichnet, dass
der Formkörper eine Wärmeleitfähigkeit von 0,020 bis 0,035 W/(m*K), bevorzugt von 0,024 bis 0,030W/(m*K) aufweist, bestimmt mittels DIN EN 13165:2016-09 und bevorzugt einen Druckspannungswert bei Kompression von 10%, bestimmt mittels DIN EN ISO 3386-1:2015-10, zwischen 0,1 kPa und 200 kPa, bevorzugt zwischen 1 kPa und 100 kPa und besonders bevorzugt zwischen 5 kPa und 50 kPa, aufweist.

Nach einer zweiten Ausführungsform betrifft die Erfindung einen Formkörper gemäß Ausführungsform 1, dadurch gekennzeichnet, dass das Hartschaum-Granulat A) aus einem oder mehreren Polymerschaum-Granulaten besteht, ausgewählt aus Polyurethanhartschaumgranulat, Polyisocyanuratschaumgranulat, Phenolschaumgranulat, Polystyrolschaumgranulat, Melaminharzschaumgranulat oder Mischungen davon, bevorzugt Polyurethanschaumgranulat oder Polyisocyanuratschaumgranulat, insbesondere aus Produktionsabfällen oder Recyclingmaterial.

Nach einer dritten Ausführungsform betrifft die Erfindung einen Formkörper gemäß Ausführungsform 2, dadurch gekennzeichnet, dass das Hartschaum-Granulat A) ein Polyurethanhartschaumgranulat ist, wobei der Polyurethanhartschaum erhältlich ist durch Umsetzung von:

A1 50 bis 100 Gew.-Teilen einer oder mehrerer gegenüber Isocyanaten reaktionsfähige Wasserstoffatome aufweisende Verbindung mit OHZ gemäß DIN 53240:2016-03 von 100 bis 1000 mg KOH/g, besonders bevorzugt Verbindungen mit OHZ gemäß DIN 53240:2016-03 von 150 bis 600 mg KOH/g und/oder mit einer Funktionalität von 1 bis 8, bevorzugt von 2 bis 6;

A2 0 bis 50 Gew.-Teilen einer oder mehrerer gegenüber Isocyanaten reaktionsfähige Wasserstoffatome aufweisende Verbindung mit OHZ gemäß DIN 53240:2016-03 von 10 bis 99 mg KOH/g, besonders bevorzugt Verbindungen mit OHZ gemäß DIN 53240:2016-03 von 15 bis 80 mg KOH/g und/oder mit einer Funktionalität von 2 bis 8 , bevorzugt von 2 bis 6,

A3 bis 10 Gew.-Teilen einer oder mehrere mit mindestens zwei gegenüber Isocyanaten reaktionsfähigen Wasserstoffatomen aufweisenden Verbindung mit einem Molekulargewicht von 62 bis 399 g/mol, die nicht unter die Definition der Komponente A1 oder A2 fallen,

A4 0 bis 6 Gew.-Teilen Wasser und/oder 1 bis 30 Gew.-Teilen, bevorzugt 1,5 bis 20 Gew.-Teilen, stärker bevorzugt 2 bis 15 Gew.-Teilen, physikalische Treibmittel,

A5 0 bis 40 Gew.-Teilen, bevorzugt 5 bis 35 Gew.-Teilen, ein oder mehrer Flammschutzmittel,

A6 0 bis 20 Gew.-Teilen Hilfs- und Zusatzstoffen wie

a) Katalysatoren,
b) oberflächenaktive Zusatzstoffe,
c) ein oder mehrere Additive, ausgewählt aus der Gruppe bestehend aus Reaktionsverzögerer, Zellregler, Pigmente, Farbstoffe, Stabilisatoren gegen Alterungs- und Witterungseinflüsse, Weichmacher, fungistatisch und bakteriostatisch wirkende Substanzen, Füllstoffe und Trennmittel,

und

B1 Di- oder Polyisocyanaten, vorzugsweise ausgewählt aus 4,4'-Diphenylmethandiisocyanat, 2,4'-Diphenylmethandiisocyanat, 2,2'-Diphenylmethandiisocyanat und/oder Mischungen aus Isomeren des Diphenylmethandiisocyanat und dessen Oligomeren, und/oder von diesen abgeleitete Di- oder Polyisocyanate, die Carbodiimid-, Urethan-, Allophanat-, Isocyanurat-, Harnstoff- oder Biuretgruppen enthalten;

wobei die Summe von A1 und A2 100 Gew.-Teile ergibt und sich die Anteile der Komponenten A3 bis A6 auf 100 Gew.-Teile von A1 und A2 beziehen, und

wobei die Herstellung bei einer Kennzahl von 80 bis 500, bevorzugt von 100 bis 450, erfolgt und die erhaltenen Polyurethan-Hartschaumstoffe sich bevorzugt durch einen Druckspannungswert, bestimmt mittels DIN EN ISO 3386-1:2015-10, bei einer Kompression von 10% zwischen 60 und 800 kPa, bevorzugt zwischen 100 und 500 kPa, auszeichnen.

Nach einer vierten Ausführungsform betrifft die Erfindung einen Formkörper gemäß einer der vorstehende Ausführungsformen, dadurch gekennzeichnet, dass die Weichschaum-Matrix B) eine Polyurethan-Weichschaum-Matrix ist, welche bevorzugt ausgewählt ist aus Polyether-Schaumstoff, einem High Resilent-Schaumstoff, Polyester-Schaumstoff oder viskoelastischen Weichschäumen, bevorzugt sind in der Weichschaum-Matrix B) Additive und/oder Flammschutzmittel enthalten.

Nach einer fünften Ausführungsform betrifft die Erfindung einen Formkörper gemäß Ausführungsform 4, dadurch gekennzeichnet, dass die Weichschaum-Matrix eine Polyurethan-Weichschaum-Matrix ist, wobei der Polyurethan-Weichschaum erhältlich ist durch Umsetzung von:

A11 mindestens einer gegenüber Isocyanaten reaktionsfähige Wasserstoffatome aufweisende Verbindung mit einer OHZ gemäß DIN 53240:2016-03 von 10 bis 250 mg KOH/g, besonders bevorzugt Verbindungen mit einer OHZ gemäß DIN 53240:2016-03 von 15 bis 120 mg KOH/g, und/oder mit einer Funktionalität von 2 bis 8, besonders bevorzugt von 2 bis 6,

A12 gegebenenfalls einem oder mehreren füllstoffhaltigen Polyolen,

A13 0 bis 100 Gew.-Teilen einer oder mehrerer gegenüber Isocyanaten reaktionsfähige Wasserstoffatome aufweisende Verbindungen mit einem Molekulargewicht von 62 bis 399 g/mol, die nicht unter die Definition der Komponente A11 oder A12 fallen,

A14 1 bis 25 Gew.-Teilen Wasser und/oder physikalische Treibmittel,

A15 0 bis 30 Gew.-Teilen Flammschutzmittel,

A16 0 bis 20 Gew.-Teilen Hilfs- und Zusatzstoffen wie

    a) Katalysatoren,

    b) oberflächenaktive Zusatzstoffe,

    c) ein oder mehrere Additive, ausgewählt aus der Gruppe bestehend aus Reaktionsverzögerer, Zellregler, Pigmente, Farbstoffe, Stabilisatoren gegen Alterungs-und Witterungseinflüsse, Weichmacher, fungistatisch und bakteriostatisch wirkende Substanzen, Füllstoffe und Trennmittel,

und

B2 Di- oder Polyisocyanaten, vorzugsweise ausgewählt aus Toluol-2,4-diisocyanat, Toluol-2,6-diisocyanat, 4,4'-Diphenylmethandiisocyanat, 2,4'-Diphenylmethandiisocyanat, 2,2'-Diphenylmethandiisocyanat und/oder Mischungen aus Isomeren des Diphenylmethandiisocyanat und dessen Oligomeren;

wobei die Summe von A11 und A12 100 Gew.-Teile ergibt und sich die Anteile der Komponenten A13 bis A16 auf 100 Gew.-Teile von A11 und A12 beziehen,

wobei die Herstellung bei einer Kennzahl von 70 bis 150 erfolgt und die erhaltene Polyurethan-Weichschaum-Matrix sich bevorzugt durch einen Druckspannungswert, bestimmt mittels DIN EN ISO 3386-1:2015-10, bei einer Kompression von 10% zwischen 0 und 50 kPa, bevorzugt zwischen 0 und 10 kPa, auszeichnet.

Nach einer sechsten Ausführungsform betrifft die Erfindung einen Formkörper gemäß einer der vorstehende Ausführungsformen, dadurch gekennzeichnet, dass das Hartschaum-Granulat in Form von

    a) unregelmäßigen Partikeln vorliegt, die bevorzugt durch Zerkleinerung von Hartschaum in einem Schredder erhalten wurden und/oder

    b) in Form von Polyedern vorliegt, die bevorzugt durch Zerkleinern von Hartschaum durch Zersägen oder Zerschneiden erhalten wurden,

und/oder das Hartschaum-Granulat bevorzugt einen Durchmesser von 1 bis 300 mm, bevorzugt 5 bis 200 mm, stärker bevorzugt 10 bis 100 mm aufweist, bestimmt mittels Siebanalyse gemäß DIN 66165-1:2016-08 beziehungsweise wird bei Größen über 125 mm der Durchmesser mittels einer Schieblehre über die größtmögliche Distanz ermittelt; und/oder eine Dichte von 10 bis 100 g/L, bevorzugt 20 bis 50 g/L, aufweist, bestimmt mittels DIN EN ISO 845:2009-10.

Nach einer siebten Ausführungsform betrifft die Erfindung einen Formkörper gemäß einer der vorstehenden Ausführungsformen, dadurch gekennzeichnet, dass die Komponenten A) und B) in einem Masseverhältnis von 10:90 bis 90:10 zueinander vorliegen, bevorzugt von 30:70 bis 70:30, und/oder A) zu B) in einem Volumenverhältnis von 10:90 bis 90:10 vorliegt, bevorzugt von 30:70 bis 70:30.

Nach einer achten Ausführungsform betrifft die Erfindung einen Formkörper gemäß einer der vorstehenden Ausführungsformen, dadurch gekennzeichnet, dass dieser eine spezifische Wärmespeicherkapazität von 1000 bis 2000 J/(kg*K), bevorzugt von 1200 bis 1800 J/(kg*K), bestimmt mittels DIN EN 12524:2000-07, aufweist; und/oder dieser eine Rohdichte von 15 bis 100 g/L, bevorzugt 20 bis 80 g/L, aufweist, bestimmt mittels DIN EN ISO 845:2009-10.

Nach einer neunten Ausführungsform betrifft die Erfindung einen Formkörper gemäß einer der vorstehenden Ausführungsformen, dadurch gekennzeichnet, dass dieser als diskontinuierlich gefertigte Platte mit einer Länge zwischen 400 und 4000 mm, bevorzugt zwischen 600 und 3000 mm, und einer Breite zwischen 200 und 2000 mm, bevorzugt zwischen 400 und 1000 mm vorliegt; oder dieser als kontinuierlich gefertigte Bahn mit einer Breite zwischen 400 und 4000 mm, bevorzugt zwischen 600 und 3000 mm und/ oder eine mittlere Dicke von 10 bis 300 mm, bevorzugt 30 bis 250 mm vorliegt; oder dieser als Dämmkeil mit einer Länge zwischen 400 und 4000 mm, bevorzugt zwischen 600 und 3000 mm, und einer Breite zwischen 200 und 2000 mm, bevorzugt zwischen 400 und 1000 mm, vorliegt.

Nach einer zehnten Ausführungsform betrifft die Erfindung ein Verfahren zur Herstellung eines Formkörpers gemäß einer der Ausführungsformen 1 bis 9, umfassend die Schritte:

    i) Bereitstellen einer Form,

    ii) Befüllen der Form mit mindestens 10 Volumen-%, bevorzugt zwischen 30 und 70 Gewichts-%, des Hartschaum-Granulats,

    iii) Umschäumen, bevorzugt durch Übergießen, mit der Weichschaum-Matrix,

iv) Verschließen der Form bis die Weichschaumreaktion abgeschlossen ist, und

v) Öffnen der Form und Entformen des Formkörpers.

Nach einer elften Ausführungsform betrifft die Erfindung ein Verfahren zur Herstellung eines Formkörpers gemäß einer der Ausführungsformen 1 bis 9, umfassend die Schritte:

i) Bereitstellen des Hartschaum-Granulats,

ii) Benetzen des Granulats mit der Reaktionsmischung für die Weichschaum-Matrix, und

iii) Erwärmen der im Schritt ii) erhaltenen Komponente oder kontinuierliches oder diskontinuierliches Pressen der in Schritt ii) erhaltenen Komponente.

Nach einer zwölften Ausführungsform betrifft die Erfindung die Verwendung des Formkörpers gemäß einer der Ausführungsformen 1 bis 9 zur thermischen Isolation, bevorzugt als Dämmmaterial, insbesondere bevorzugt zur Dämmung von Hohlräumen, zur Dämmung von gewölbten Körpern, wie Warmwasserspeicher, und zur Zwischensparrendämmung.

Im Sinne der vorliegenden Erfindung, wenn ein spezifisches Hartschaum-Granulat beschrieben wird, zum Beispiel, dass das Hartschaum-Granulat aus Polyurethanhartschaumgranulat besteht, so kann dieses spezifische Hartschaum-Granulat aus einem oder mehreren Polyurethanhartschaumgranulat(en) bestehen. Es können also die einzelnen Granulatpartikel alle aus demselben Polyurethanhartschaum bestehen oder aus verschiedenen Polyurethanhartschäumen bestehen.

Werden spezifische Hart- oder Weichschäume beschrieben, die durch die Umsetzung von spezifischen Komponenten erhalten werden können, so sind dabei auch die Ausführungsformen umfasst, welche lediglich die explizit genannten Komponenten aufweisen. Also abschließend im Sinne von "bestehend aus" definiert sind.

Für den Fachmann ist die Abgrenzung von Hartschaum zu Weichschaum eindeutig. Im Sinne der vorliegenden Erfindung weißt ein Hartschaum einen Druckspannungswert, bestimmt mittels DIN EN ISO 3386-1:2015-10, bei einer Kompression von 10% von 60 kPa oder mehr auf, während ein Weichschaum bei gleichen Messbedingungen einen Druckspannungswert von 50 kPa oder weniger aufweist.

Der Formkörper der vorliegenden Erfindung umfasst ein Hartschaum-Granulat und eine Weichschaum-Matrix und weist eine spezifische Wärmeleitfähigkeit auf. In einer bevorzugten Ausführungsform ist zusätzlich zu dem Hartschaum-Granulat ferner ein Weichschaum-Granulat enthalten. Das Weichschaumgranulat kann dabei dieselbe Zusammensetzung wie die nachstehend beschriebene Weichschaum-Matrix besitzen.

Einige Verbindungen der vorliegenden Erfindung werden mittels ihrer Hydroxylzahl, in der vorliegenden Erfindung auch lediglich als OHZ bezeichnet, weiter definiert, welche nach DIN 53240:2016-03 bestimmt wird.

Hartschaum-Granulat A)

Das Hartschaum-Granulat A) besteht bevorzugt aus ein oder mehreren Polymerschaumgranulaten, ausgewählt aus Polyurethanhartschaumgranulat, Polyisocyanuratschaumgranulat, Phenolschaumgranulat, Polystyrolschaumgranulat, Melaminharzschaumgranulat oder Mischungen davon, besonders bevorzugt Polyurethanhartschaumgranulat oder Polyisocyanuratschaumgranulat. In einer bevorzugten Ausführungsform wird das Hartschaum-Granulat A) aus Produktionsabfällen oder Recyclingmaterial erhalten.

In einer besonders bevorzugten Ausführungsform ist das Hartschaum-Granulat A) ein Polyurethanhartschaumgranulat. In einer noch stärker bevorzugten Ausführungsform wird der Polyurethanhartschaum für dieses Polyurethanhartschaumgranulat durch Umsetzen der Komponenten wie vorstehend unter Ausführungsform 3 beschrieben erhalten. Im Folgenden werden bevorzugte Ausführungsformen für die einzelnen Komponenten A1 bis A6 und B1 näher beschrieben.

Komponente A1:

Die Komponente A1 ist eine, eine oder mehrerer gegenüber Isocyanaten reaktionsfähige Wasserstoffatome aufweisende Verbindung mit einer OHZ gemäß DIN 53240:2016-03 von 100 bis 1000 mg KOH/g.

Als Verbindungen mit gegenüber Isocyanat reaktionsfähige Wasserstoffatome aufweisende Verbindung kommen insbesondere solche in Frage, die eine oder mehrere reaktive Gruppen, ausgewählt aus OH-Gruppen, SH-Gruppen, NH-Gruppen, $NH_2$-Gruppen und CH-aciden Gruppen, wie z.B. $\alpha$-Diketo-Gruppen, im Molekül tragen. Zur Herstellung der Polyurethanhartschaumstoffe kommen insbesondere Verbindungen mit 2 bis 8 OH-Gruppen zum Einsatz. Vorzugsweise eingesetzt werden Polyetherpolyole und/oder Polyesterpolyole und/oder Polycarbonatpolyole, insbesondere Polyetherpolyole und/oder Polyesterpolyole.

Für die Polyurethansynthese einsetzbare Polyether- und Polyesterpolyole sind dem Fachmann bekannt. Solche sind beispielsweise von Ionescu in "Chemistry and Technology of Polyols for Polyurethanes", Rapra Technology Limited, Shawbury 2005, S.55 ff. (Kap. 4: Oligo-Polyols for Elastic Polyurethanes), S. 263 ff. (Kap. 8: Polyester Polyols for Elastic Polyurethanes) und insbesondere auf S.321 ff. (Kap. 13: Polyether Polyols for Rigid Polyurethane Foams) und S.419 ff. (Kap. 16: Polyester Polyols for Rigid Polyurethane Foams) beschrieben worden.

Die Hydroxylzahl der bevorzugt verwendeten Polyether- und Polyesterpolyole beträgt 100 bis 1000 mg KOH/g, besonders bevorzugt weisen sie eine OHZ von 150 bis 600 mg KOH/g und eine Funktionalität von 2 bis 8, bevorzugt von 2 bis 6, auf. In einer besonders bevorzugten Ausführungsform werden auch Mischungen der vorstehend genannten Polyole eingesetzt.

Komponente A2:

Die Komponente A2 ist eine, ein oder mehrerer gegenüber Isocyanaten reaktionsfähige Wasserstoffatome aufweisende Verbindung mit einer OHZ gemäß DIN 53240:2016-03 von 10 bis 99 mg KOH/g

Als Verbindungen mit gegenüber Isocyanat reaktiven Gruppen kommen insbesondere solche in Frage, die eine oder mehrere reaktive Gruppen, ausgewählt aus OH-Gruppen, SH-Gruppen, NH-Gruppen, NH$_2$-Gruppen und CH-aciden Gruppen, wie z.B. $\alpha$-Diketo-Gruppen, im Molekül tragen. Zur Herstellung der Polyurethanhartschaumstoffe kommen insbesondere Verbindungen mit 2 bis 8 OH-Gruppen zum Einsatz. Vorzugsweise eingesetzt werden Polyetherpolyole und/oder Polyesterpolyole und/oder Polycarbonatpolyole, insbesondere Polyetherpolyole und/oder Polyesterpolyole. Für die Polyurethansynthese einsetzbare Polyether- und Polyesterpolyole sind dem Fachmann bekannt. Solche sind beispielsweise von Ionescu in "Chemistry and Technology of Polyols for Polyurethanes", Rapra Technology Limited, Shawbury 2005, S.55 ff. (Kap. 4: Oligo-Polyols for Elastic Polyurethanes), S. 263 ff. (Kap. 8: Polyester Polyols for Elastic Polyurethanes) und insbesondere auf S.321 ff. (Kap. 13: Polyether Polyols for Rigid Polyurethane Foams) und S.419 ff. (Kap. 16: Polyester Polyols for Rigid Polyurethane Foams) beschrieben worden.

Die Hydroxylzahl der bevorzugt verwendeten Polyether- und Polyesterpolyole beträgt 10 bis 99 mg KOH/g, besonders bevorzugt weisen sie eine OHZ von 15 bis 80 mg KOH/g und eine Funktionalität von 2 bis 8, bevorzugt von 2 bis 6, auf. In einer besonders bevorzugten Ausführungsform werden auch Mischungen der vorstehend genannten Polyole eingesetzt.

Komponente A3:

Die Komponente A3 ist eine Verbindung mit mindestens zwei gegenüber Isocyanaten reaktionsfähigen Wasserstoffatomen mit einem Molekulargewicht von 62 bis 399 g/mol, die nicht unter die Definition der Komponente A1 oder A2 fällt.

Als Verbindungen mit mindestens zwei gegenüber Isocyanat reaktiven Gruppen kommen insbesondere solche in Frage, die eine oder mehrere reaktive Gruppen, ausgewählt aus OH-Gruppen, SH-Gruppen, NH-Gruppen, NH$_2$-Gruppen und CH-aciden Gruppen, wie z.B. $\alpha$-Diketo-Gruppen, im Molekül tragen. Zur Herstellung der Polyurethanhartschaumstoffe kommen insbesondere Verbindungen mit 2 bis 8 OH-Gruppen und/oder NH-Gruppen und/oder NH$_2$-Gruppen zum Einsatz. Vorzugsweise eingesetzt werden Polyetherpolyole und/oder Polyesterpolyole.

Besonders bevorzugt ist die Komponente A3 ein Kettenverlängerungs- und/oder Vernetzungsmittel. Als Kettenverlängerungs- und/oder Vernetzungsmittel sind insbesondere di- oder trifunktionelle Amine und Alkohole, insbesondere Diole und/oder Triole bevorzugt.

Komponente A4:

Die Komponente A4 besteht aus 0 bis 6 Gew.-Teilen Wasser und/oder aus 1 bis 30 Gew.-Teilen physikalischer Treibmittel. Unter chemischen Treibmitteln werden generell Verbindungen verstanden, die durch Reaktion mit Isocyanat gasförmige Produkte bilden. Demgegenüber werden unter physikalischen Treibmitteln solche Verbindungen verstanden, die in flüssiger oder gasförmiger Form eingesetzt werden und keine chemische Reaktion mit dem Isocyanat eingehen.

Unter physikalischen Treibmitteln versteht man Verbindungen, die in den Einsatzstoffen der Polyurethan-Herstellung gelöst oder emulgiert sind und unter den üblichen Reaktionsbedingungen verdampfen. Dabei handelt es sich beispielsweise um Kohlenwasserstoffe wie z.B. Cyclopentan, Isopentan und n-Pentan, Butan und Propan, halogenierte Kohlenwasserstoffe, und andere Verbindungen, wie zum Beispiel perfluorierte Alkane, wie Perfluorhexan, perfluorierte Alkene wie 1,1,1,2,3,4,5,5,5-Nonafluoro-4-(trifluoromethyl)pent-2-en, 1,1,1,3,4,4,5,5,5-Nonafluoro-2-(trifluoromethyl)pent-2-en oder cis-1,1,1,4,4,4-Hexafluoro-2-buten, Fluorchloralkene wie Trans-1-chloro-3,3,3-trifluoropropen, sowie Ether, Ester, Ketone und/oder Acetale. Als Treibmittelkomponente A4 werden bevorzugt Kohlenwasserstoffe und/oder Wasser eingesetzt. Besonders bevorzugte Kohlenwasserstoffe sind n-Pentan, Cyclopentan, iso-Pentan und/oder Mischungen der Isomeren. Insbesondere werden Cyclopentan und/oder n-Pentan als Treibmittel A4 verwendet.

Ein chemisches Treibmittel ist Wasser, welches durch Reaktion mit Isocyanaten unter Harnstoff- bzw. Amidbildung Kohlendioxid freisetzt.

In einer bevorzugten Ausführungsform ist A4 ein Treibmittelgemisch aus Kohlenwasserstoffen, insbesondere n-Pentan und/oder Cyclopentan, und Wasser.

Komponente A5:

Die Zusammensetzung kann gegebenenfalls bis zu 40 Gew.-Teile Flammschutzmittel enthalten.

Als Flammschutzmittel können im Allgemeinen die aus dem Stand der Technik bekannten Flammschutzmittel verwendet werden. Geeignete Flammschutzmittel sind beispielsweise bromierte Ether (z.B. Ixol® B251), bromierte Alkohole wie Dibromneopentylakohol, Tribromneopentylalkohol und PHT-4-Diol sowie chlorierte Phosphate wie z.B. Tris-(2-chlorethyl)phosphat, Tris-(2-chlorisopropyl)phosphat (TCPP), Tris(1,3-dichlorisopropyl)phosphat, Tris-(2,3-dibrompropyl)phosphat und Tetrakis-(2-chlorethyl)-ethylendiphosphat. Außer den bereits genannten halogensubstituierten Phosphaten können auch anorganische Flammschutzmittel, wie roter Phosphor, roten Phosphor enthaltende Zubereitungen, Aluminiumoxidhydrat, Antimontrioxid, Ammoniumpolyphosphat und Calciumsulfat oder Cyanursäurederivate, wie z.B. Melamin oder Mischungen aus mindestens zwei Flammschutzmitteln, wie z.B. Ammoniumpolyphosphaten und Melamin sowie gegebenenfalls Stärke als Flammschutzmittel verwendet werden. Als weitere flüssige halogenfreie Flammschutzmittel können Diethylethanphosphonat (DEEP), Triethylphosphat (TEP), Dimethylpropylphosphonat (DMPP), Diphenylkresylphosphat (DPK) und andere verwendet werden. Die Flammschutzmittel werden im Rahmen der vorliegenden Erfindung bevorzugt in einer Menge von 0 bis 40 Gew.-Teilen, besonders bevorzugt von 0,3 bis 25 Gew.-Teilen, insbesondere von 0,5 bis 15 Gew.-Teile, bezogen auf das Gesamtgewicht der Komponenten A1 und A2 verwendet.

Komponente A6:

Als Komponente A6 werden gegebenenfalls Hilfs- und Zusatzstoffe (welche nicht Komponente A5 umfassen) verwendet wie

a) Katalysatoren (Aktivatoren),
b) oberflächenaktive Zusatzstoffe (Tenside), wie Emulgatoren und Schaumstabilisatoren,
c) ein oder mehrere Additive, ausgewählt aus der Gruppe bestehend aus Reaktionsverzögerern (z.B. sauer reagierende Stoffe wie Salzsäure oder organische Säurehalogenide), Zellreglern (wie beispielsweise Paraffine oder Fettalkohole oder Dimethylpolysiloxane), Pigmenten, Farbstoffen, Stabilisatoren gegen Alterungs- und Witterungseinflüsse, Weichmachern, fungistatisch und bakteriostatisch wirkende Substanzen, Füllstoffen (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffe sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Als Katalysatoren können beispielsweise die bekannten Polyurethanbildungskatalysatoren eingesetzt werden, beispielsweise organische Zinnverbindungen, wie Zinndiacetat, Zinndioctoat, Dibutylzinndilaurat und/oder stark basische Amine wie 2,2,2-Diazabicyclooctan, Triethylamin, Triethylendiamin, Pentamethyldiethylentriamin, N,N-Dimethylcyclohexylamin oder Bis(N,N-Dimethylaminoethyl)ether, N,N-Dimethylbenzylamin und N-Methylimidazol. Die Katalysatoren werden vorzugsweise in Mengen von 0,05 bis 3 Gew.-%, vorzugsweise 0,06 bis 2 Gew.-%, bezogen auf das Gesamtgewicht aller Komponenten A1 und A2, eingesetzt.

Als oberflächenaktive Zusatzstoffe und/oder Schaumstabilisatoren werden Stoffe bezeichnet, welche die Ausbildung einer regelmäßigen Zellstruktur bei der Schaumbildung fördern. Beispielsweise sind genannt: Siliconhaltige Schaumstabilisatoren, wie Siloxan-Oxyalkylen-Mischpolymerisate und andere Organopolysiloxane, ferner Alkoxylierungsprodukte von Fettalkoholen, Oxoalkoholen, Fettaminen, Alkylphenolen, Dialkylphenolen, Alkylkresolen, Alkylresorcin, Naphthol, Alkylnaphthol, Naphtylamin, Anilin, Alkylanilin, Toluidin, Bisphenol-A, alkyliertem Bisphenol-A, Polyvinylalkohol, sowie weiterhin Alkoxylierungsprodukte von Kondensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Toluidin, Formaldehyd und Naphthol, Formaldehyd und Alkylnaphthol sowie Formaldehyd und Bisphenol-A. Als Alkoxylierungsreagenzien können beispielsweise Ethylenoxid und/oder Propylenoxid eingesetzt werden.

Komponente B1:

Als di- oder polyisocyanathaltige Komponente kommen bevorzugt die für die Herstellung von Polyurethan-Hartschaumstoffen verwendbaren aliphatischen, cycloaliphatischen und insbesondere aromatischen Di- und/oder Polyisocyanate in Frage. Insbesondere bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Polymer-MDI). Die Isocyanate können auch modifiziert sein, beispielsweise durch Einbau von Uretdion-, Carbamat-, Isocyanurat-, Carbodiimid-, Allophanat- und insbesondere Urethangruppen. Zur Herstellung von Polyurethan-Hartschaumstoffen wird insbesondere Polymer-MDI eingesetzt.

Umsetzung von A1-A6 mit B1:

Die Umsetzung der Komponenten erfolgt bei einer Isocyanat-Kennzahl, auch lediglich als Kennzahl bezeichnet, von 80 bis 500, bevorzugt von 100 bis 450.
Unter der Isocyanat-Kennzahl (auch Kennzahl oder Isocyanat-Index genannt) wird dabei der Quotient aus der tatsächlich eingesetzten Stoffmenge [Mol] an Isocyanat-Gruppen und der tatsächlich eingesetzten Stoffmenge [Mol] an Isocyanat-reaktiven Gruppen, multipliziert mit 100, verstanden:

$$\text{Kennzahl} = (\text{Mole Isocyanat-Gruppen} / \text{Mole Isocyanat-reaktive Gruppen}) * 100$$

Die Polyurethan-Hartschäume können diskontinuierlich oder kontinuierlich mit Hilfe bekannter Verfahren hergestellt werden. Dem Fachmann bekannt sind u.a. die Blockschaumherstellung (kontinuierlich und diskontinuierlich), die Verwendung in Einkomponentensystemen (diskontinuierlich) und im Isolierformschaum (diskontinuierlich). Die hier beschriebene Erfindung bezieht sich auf alle Verfahren. Ein bevorzugtes Verfahren ist das kontinuierliche Herstellungsverfahren von Blockschäumen. Ein weiteres bevorzugtes Verfahren ist das kontinuierliche Doppelbandverfahren zur Herstellung von Verbundelementen enthaltend Polyurethan-Hartschaumstoffkerne und eine oder mehrere Deckschichten.
Die Deckschicht des Verbundmaterials ist dabei bevorzugt ausgewählt aus: einer Metallmaterialbahn, insbesondere aus einem Metallmaterial aus der Gruppe der Stähle, der Edelstähle oder aus einem Aluminiummaterial oder aus einer Kunststoffmaterialbahn, insbesondere aus Polyvinylchlorid, Polyethylen oder Acrylnitril-Butadien-Styrol-Copolymer.

Herstellung des Hartschaum-Granulats A):

Das Hartschaum-Granulat kann aus frisch hergestelltem Hartschaum oder altem Hartschaum, also Recyclingmaterial, hergestellt werden. Verfahren um einen Hartschaum in Granulat(e) umzuwandeln sind dem Fachmann bekannt. Dabei kann ein Verbundelementen enthaltend Hartschaumstoffkerne, bevorzugt Polyurethan-Hartschaumstoffkerne, und eine oder mehrere Deckschichten vor der Granulierung von den Deckschichten befreit werden oder diese Deckschichten können zusammen mit dem Hartschaumstoffkern zerkleinert werden. Dabei kann das Granulat als unregelmäßige Partikel vorliegen, als Kugeln, oder als Polyeder oder in Mischungen davon, bevorzugt als unregelmäßige Partikel oder Polyeder oder Mischungen davon. Zur Zerkleinerung des Ausgangsmaterials kann ein Schredder, ein Granulator, eine Schneidmühle oder eine Brockenmühle verwendet werden, ebenfalls möglich ist das Zerkleinern durch Zersägen oder Zerschneiden. Bevorzugte Polyeder sind Würfel, Quader, Prismen, Pyramiden und Spate.
In einer bevorzugten Ausführungsform weißt das Hartschaum-Granulat im Wesentlichen einen Durchmesser von 1 bis 300 mm, bevorzugt 5 bis 200 mm, stärker bevorzugt 10 bis 100 mm, auf. Der Durchmesser wird dabei durch Siebanalyse gemäß DIN 66165-1:2016-08 ermittelt. Bei Größen über 125 mm wird der Durchmesser mittels einer Schieblehre über die größtmöglichste Distanz ermittelt. Im Wesentlichen im Bezug auf den Durchmesser bedeutet, dass mindestens 95 Gew.-%, bevorzugt 98 Gew.-%, stärker bevorzugt 99 Gew.-%, am stärksten bevorzugt 99,9 Gew.-%, bezogen auf das Gesamtgewicht des Hartschaum-Granulats an Granulaten der beanspruchten Größe vorliegen. Insbesondere schließt die vorliegende Erfindung nicht aus, dass auch kleinere Partikel, die eventuell beim Zerkleinerungsvorgang entstehen ebenfalls in dem Formkörper enthalten sein können.

Weichschaum-Matrix B)

Die Weichschaum-Matrix B) besteht bevorzugt aus Polyurethan-Weichschaum. Insbesondere ist sie bevorzugt ausgewählt aus Polyether-Schaumstoff, einem High Resilent-Schaumstoff, Polyester-Schaumstoff oder viskoelastischen Weichschäumen.

In einer besonders bevorzugten Ausführungsform ist die Weichschaum-Matrix ein Polyurethan-Weichschaum. In einer noch stärker bevorzugten Ausführungsform wird diese Polyurethanweichschaum-Matrix durch Umsetzen der Komponenten wie vorstehend unter Ausführungsform 5 beschrieben erhalten. Im Folgenden werden bevorzugte Ausführungsformen für die einzelnen Komponenten A11 bis A16 und B2 näher beschrieben.

Komponente A11:

Bei Komponente A11 handelt es sich um eine oder mehrere Verbindungen, die mindestens ein gegenüber Isocyanaten reaktionsfähiges Wasserstoffatom aufweisen, mit einer OHZ gemäß DIN 53240:2016-03 von 10 bis 250 mg KOH/g, besonders bevorzugt mindestens eine Verbindung mit einer OHZ gemäß DIN 53240:2016-03 von 15 bis 120 mg KOH/g, und/oder mit einer Funktionalität von 2 bis 8, besonders bevorzugt von 2 bis 6. Unter einer gegenüber Isocyanaten reaktionsfähiges Wasserstoffatom aufweisenden Verbindung versteht man insbesondere Verbindungen mit Aminogruppen, Thiogruppen oder Carboxylgruppen und Hydroxylgruppen, besonders bevorzugt Verbindungen mit Hydroxylgruppen, insbesondere 2 bis 8 Hydroxylgruppen aufweisende Verbindungen speziell solche mit einer OHZ gemäß DIN 53240:2016-03 von 15 bis 120 mg KOH/g, z.B. mindestens 2, in der Regel 2 bis 8, vorzugsweise aber 2 bis 6, Hydroxylgruppen aufweisende Polyether und Polyester sowie Polycarbonate und Polyesteramide, wie sie für die Herstellung von homogenen und von zellförmigen Polyurethanen an sich bekannt sind und wie sie z.B. in der EP-A 0 007 502, Seiten 8 - 15, beschrieben werden. Die mindestens zwei Hydroxylgruppen aufweisenden Polyetherpolyole sind erfindungsgemäß bevorzugt. Vorzugsweise werden die Polyetherpolyole hergestellt durch Addition von Alkylenoxiden (wie beispielsweise Ethylenoxid,Propylenoxid und Butylenoxid oder deren Mischungen) an Startern wie Ethylenglykol, Propylenglykol, Glycerin, Trimethylolpropan, Pentaerythrit, Sorbit, Mannit und/oder Sucrose, so dass eine Funktionalität zwischen 2 und 8, vorzugsweise zwischen 2,5 und 6, besonders bevorzugt zwischen 2,5 und 4 eingestellt werden kann.

Komponente A12:

Komponente A12 kann gegebenenfalls enthalten sein. Dabei handelt es sich um ein oder mehrere füllstoffhaltige Polyole, wobei der Füllstoff ein Reaktionsprodukt aus Di- und oder Polyisocyanaten mit gegenüber Isocyanaten reaktionsfähigen Wasserstoffatomen aufweisenden Verbindungen sein kann. Füllstoffhaltige Polyole mit einem Füllstoffaufbau aus Polyharnstoffdispersionen (PHD) werden kurz PHD-Polyole genannt. Vorzugsweise handelt es sich um füllstoffhaltige Polyole mit einem Füllstoffaufbau aus Polyharnstoffdispersionen, die durch Umsetzung von Di- und/oder Polyisocyanaten mit primären und/oder sekundären Aminogruppen aufweisenden Di- und/oder Polyaminen und/oder Hydrazinen in einer Polyolkomponente erhältlich sind. Die PHD-Polyole werden beispielsweise hergestellt durch in situ Polymerisation von Di- und/oder Polyisocyanaten mit primären und/oder sekundären Aminogruppen aufweisenden Di- und/oder Polyaminen und/oder Hydrazinen in einer 1 bis 8 primäre und/oder sekundäre Hydroxylgruppen aufweisenden Verbindung mit einem Molekulargewicht von 400 bis 18000 g/mol. Füllstoffhaltigen Polyole mit einem Füllstoffaufbau erhältlich durch Umsetzung von Alkanolaminen mit Di- und/oder Polyisocyanaten werden kurz PIPA-Polyole genannt. Vorzugsweise handelt es sich um füllstoffhaltige Polyole mit einem Füllstoffaufbau aus Urethangruppen enthaltenden Dispersionen, die durch Umsetzung von Alkanolaminen mit Di- und/oder Polyisocyanaten in einer Polyolkomponente erhältlich sind, besonders bevorzugt ist eine 1 bis 8 primäre und/oder sekundäre Hydroxylgruppen aufweisenden Polyolkomponente mit einem Molekulargewicht von 400 bis 18000 g/mol. PIPA-Polyole und deren Herstelllungsweise sind in GB 2 072 204 A, DE 31 03 757 A1 und US 4 374 209 A eingehend beschrieben.

Als Komponente A12 kommen weiterhin gefüllte Polyole mit einem Füllstoffaufbau aus Dispersionen, die durch Pfropfung von olefinisch ungesättigten Monomeren (beispielsweise Styrol und/oder Acrylnitril) an ein Polyol erhalten werden (SAN-Polyole) in frage.

Die gefüllten Polyole gemäß Komponente A12 werden bevorzugt in Mengen eingesetzt, dass der Füllstoffgehalt resultierend aus der Komponente A12, bezogen auf die Gesamtmenge der Komponenten A11 und A12 ≤ 10 Gew.-%, vorzugsweise ≤ 5 Gew.-%, besonders bevorzugt ≤ 2 Gew.-% Füllstoff beträgt.

Komponente A13:

Gegebenenfalls werden als Komponente A13 eine oder mehrere Verbindungen mit mindestens zwei gegenüber Isocyanaten reaktionsfähigen Wasserstoffatomen und einem Molekulargewicht von 62 bis 399 g/mol eingesetzt. Hierunter sind Hydroxylgruppen und/oder Aminogruppen und/oder Thiolgruppen und/oder Carboxylgruppen aufweisende Verbindungen zu verstehen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Insbesondere können als Komponente Ethanolamin, Diethanolamin, Triethanolamin, Sorbit und/oder Glycerin eingesetzt werden. Weitere Beispiele für Verbindungen gemäß Komponente A13 werden in EP-A 0 007 502, Seiten 16 - 17, beschrieben.

Komponente A14:

Als Komponente A14 werden Wasser und/oder physikalische Treibmittel eingesetzt. Als physikalische Treibmittel können dieselben wie für Komponente A4 beschriebenen Treibmittel eingesetzt werden. Als physikalische Treibmittel werden insbesondere Kohlendioxid und/oder leicht flüchtige organische Substanzen wie z. B. Dichlormethan eingesetzt.

Komponente A15:

Als Flammschutzmittel A15 können beispielsweise Phosphate oder Phosphonate, wie z.B. Diethylethanphosphonat (DEEP), Triethylphosphat (TEP) und Dimethylpropylphosphonat (DMPP), eingesetzt werden. Weitere geeignete Flammschutzmittel sind beispielsweise bromierte Ester, bromierte Ether (Ixol) oder bromierte Alkohole wie Dibromneopentylakohol, Tribromneopentylalkohol, Tetrabromphthalat Diol (DP 54) und PHT-4-Diol, sowie chlorierte Phosphate wie Tris(2-chlorethyl)phosphat, Tris-(2-chlorpropyl)phosphat (TCPP), Tris(1,3-dichlorpropyl)phosphat, Trikresylphosphat, Diphenylkresylphosphat (DPK), Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole und Gemische der vorstehend genannten Verbindungen.

Komponente A16:

Als Komponente A16 werden gegebenenfalls Hilfs- und Zusatzstoffe (welche nicht Komponente A15 umfassen) verwendet, wie

d) Katalysatoren (Aktivatoren),
e) oberflächenaktive Zusatzstoffe (Tenside), wie Emulgatoren und Schaumstabilisatoren,
f) ein oder mehrere Additive, ausgewählt aus der Gruppe bestehend aus Reaktionsverzögerern (z.B. sauer reagierende Stoffe wie Salzsäure oder organische Säurehalogenide), Zellreglern (wie beispielsweise Paraffine oder Fettalkohole oder Dimethylpolysiloxane), Pigmenten, Farbstoffen, Stabilisatoren gegen Alterungs- und Witterungseinflüsse, Weichmachern, fungistatisch und bakteriostatisch wirkende Substanzen, Füllstoffen (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffe sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Als Katalysatoren werden bevorzugt eingesetzt: aliphatische tertiäre Amine (beispielsweise Trimethylamin, Tetramethylbutandiamin, 3-Dimethylaminopropylamin, N,N-Bis(3-dimethylaminopropyl)-N-isopropanolamin), cycloaliphatische tertiäre Amine (beispielsweise 1,4-Diaza(2,2,2)bicyclooctan), aliphatische Aminoether (beispielsweise Bisdimethylaminoethylether, 2-(2-Dimethylaminoethoxy)ethanol und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff und Derivate des Harnstoffs (wie beispielsweise Aminoalkylharnstoffe, siehe zum Beispiel EP-A 0 176 013, insbesondere (3-Dimethylaminopropylamin)-harnstoff).

Als Katalysatoren können auch Zinn(II)-Salze von Carbonsäuren eingesetzt werden, wobei vorzugsweise die jeweils zugrundeliegende Carbonsäure 2 bis 20 Kohlenstoffatome aufweist. Besonders bevorzugt sind das Zinn(II)-Salz der 2-Ethylhexansäure (d.h. Zinn(II)-(2-ethylhexanoat)), das Zinn(II)-Salz der 2-Butyloctansäure, das Zinn(II)-Salz der 2-Hexyldecansäure, das Zinn(II)-Salz der Neodecansäure, das Zinn(II)-Salz der Ölsäure, das Zinn(II)-Salz der Ricinolsäure und Zinn(II)laurat. Es können auch Zinn(IV)-Verbindungen, wie z.B. Dibutylzinnoxid, Dibutylzinndichlorid, Dibutylzinndiacetat, Dibutylzinndilaurat, Dibutylzinnmaleat oder Dioctylzinndiacetat als Katalysatoren eingesetzt werden.

Insbesondere können alle oben genannten Katalysatoren als Gemische eingesetzt werden.

Komponente B2:

Als Komponente B2 werden Di- oder Polyisocyanaten eingesetzt. Als Komponente B können bevorzugt aliphatische, cycloaliphatische, araliphatische, aromatische und heterocyclische Polyisocyanate eingesetzt werden, wie sie z.B. von W. Siefken in Justus Liebigs Annalen der Chemie, 562, Seiten 75 bis 136, beschrieben werden, beispielsweise solche der Formel $Q(NCO)_n$ in der n = 2 - 4, vorzugsweise 2 -3, und Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen bedeuten.

Beispielsweise handelt es sich um solche Polyisocyanate, wie sie in der EP-A 0 007 502, Seiten 7 - 8, beschrieben werden. Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise wird als Komponente B mindestens eine Verbindung ausgewählt aus der Gruppe bestehend aus 4,4'- und 2,4'- und 2,2'-Diphenylmethandiisocyanat und Polyphenylpolymethylenpolyisocyanat ("Mehrkern-MDI") eingesetzt.

Herstellung der Polyurethan-Weichschaumstoffe

Zur Herstellung der Polyurethan-Weichschaumstoffe werden die Reaktionskomponenten nach dem an sich bekannten Einstufenverfahren, dem Prepolymerverfahren oder dem Semiprepolymerverfahren zur Umsetzung gebracht, wobei man sich vorzugsweise maschineller Einrichtungen bedient wie sie in US 2 764 565 beschrieben werden. Einzelheiten über Verarbeitungseinrichtungen, die auch erfindungsgemäß infrage kommen, werden im Vieweg und Höchtlen (Hrsg.): Kunststoff-Handbuch, Band VII, Carl-Hanser-Verlag, München 1966, S. 121 bis 205 beschrieben.

Formkörper

Der Formkörper der vorliegenden Erfindung kann auf alle dem Fachmann bekannten Arten hergestellt werden. Ein besonders effizientes und einfaches Verfahren zur Herstellung eines Formkörpers gemäß der vorliegenden Erfindung umfasst dabei die Schritte:

    i) Bereitstellen einer Form,

    ii) Befüllen der Form mit mindestens 10 Volumen-% des Hartschaum-Granulats,

    iii) Umschäumen, bevorzugt durch Übergießen, mit der Weichschaum-Matrix,

    iv) Verschließen der Form bis die Weichschaumreaktion abgeschlossen ist, und

    v) Öffnen der Form und Entformen des Formkörpers.

Überraschenderweise gelang es durch einfaches Füllen der Form mit Hartschaum-Granulat und anschließendem Darübergießen des frischen Weichschaum-Reaktionsgemisches eine gleichmäßige Verteilung des Hartschaum-Granulats in der Weichschaummmatrix zu erreichen.

Weiterhin kann das Dämmmaterial neben der vorstehend beschriebenen diskontinuierlichen Herstellung in einer Form auch kontinuierlich hergestellt werden.

Eine Benetzung des Granulats mit einer Weichschaum-Reaktionsmischung gefolgt von kontinuierlicher oder diskontinuierlichem Pressen ist ebenfalls möglich.

Der erhaltene Formkörper weißt in einer bevorzugten Ausführungsform einen Druckspannungswert bei Kompression von 10%, bestimmt mittels DIN EN ISO 3386-1:2015-10, zwischen 0,1 kPa und 200 kPa, bevorzugt zwischen 1 kPa und 100 kPa und besonders bevorzugt zwischen 5 kPa und 50 kPa, auf. Somit können Formkörper erhalten werden, die sowohl eine Hartschaum-ähnliche Wärmeleitfähigkeit als auch Weichschaum-ähnliche Druckspannungswerte, also Flexibilität aufweisen.

**Beispiele**

Verwendete Materialien:

Polyol P1 (OHZ= 331 mg KOH/g):

Mischung bestehend aus:

79,94 Gew.% Polyetherpolyol mit Funktionalität=3 und OHZ=28 mg KOH/g
12,00 Gew.% Polyetherpolyol mit Funktionalität=3 und OHZ=37 mg KOH/g
4,60 Gew.% Wasser
0,90 Gew.% Tegostab® B 8761 LF2 der Firma Evonik (ein Tensid auf Siliconbasis)
0,80 Gew.% Triethanolamin
1,60 Gew.% N-(3-dimethylaminopropyl)-N,N Diisopropanolamin
0,08 Gew.% DABCO® NE300 der Firma Evonik (Katalysator auf Aminbasis)
0,08 Gew.% DABCO® 33LV der Firma Evonik (Katalysator auf Basis eines tertiären Amins)

Isocyanat Iso1:

Mischung aus Diphenylmethandiisocyanat und Polymethylenpolyphenylisocyanat mit einem Anteil von 70,17% Diphenylmethandiisocyanat und 29,83% Polymethylenpolyphenylisocyanat; NCO-Gehalt (%) = 32,3.

Beispiel 1 (erfindungsgemäß):

Ein Rahmen der Abmessung 650mm x 650mm und mit einer Höhe von 160 wurde bereitgestellt mit einem Trennmittel beschichtet. Polyisocyanurathartschaum wurde mittels einer Schneidmühle zu einem unregelmäßigen Granulat zerkleinert. Das zerkleinerte Granulat hatte dabei größtenteils eine maximale Größe (maximaler Abstand zweier Ecken eines Granulates, bestimmbar mit einer Schieblehre) von 100 mm. Größere Granulate wurden aussortiert. Weiterhin wurde das Granulat vor Verarbeitung durch Sieben von Staub und Granulaten kleiner als 15 mm getrennt. Vom so vorbehandelten Granulat wurden 1100 g in die Form locker eingefüllt, sodass die Form bis zur Oberkante mit Hartschaumgranulat gefüllt war. Mittels eines Hochdruck-Mischkopfes wurde Polyol P1 bei einem Druck von 150 bar und einer Temperatur von 30 °C mit Iso1 bei einem Druck von 165 bar und einer Temperatur von 29 °C bei einer Kennzahl von 80 und einem Mischungsverhältnis von 100:61,4 vermischt. 2700 g dieses Reaktionsgemisches wurden bei einer Auftragsleistung von 500 g/s in die Form gegeben und diese Form geschlossen. Nach 5 Minuten wurde die Form geöffnet und das Formteil entformt. Nach Lagerung über Nacht war das Formteil ausreagiert und konnte verarbeitet und getestet werden.

Wärmeleitfähigkeit

$\lambda$ (bei 10 °C) = 27,75 mW/ m*K (Mittelwert aus 2 Messungen)

Druckspannung

$\sigma$ (bei 10% Kompression) = 30 kPa (Mittelwert aus 5 Messungen)

Beispiel 2 (erfindungsgemäß):

Ein Rahmen der Abmessung 650mm x 650mm und mit einer Höhe von 160 wurde von unten auf 55 °C vorgeheizt und mit einem Trennmittel beschichtet. Polyisocyanurathartschaum wurde mittels einer Säge in Würfel der Größe 60 x 60 x 150 mm gesägt und 64 Würfel wurden in regemäßigem Abstand in der Form befestigt. Mittels eines Hochdruck-Mischkopfes wurde Polyol P1 bei einem Druck von 150 bar und einer Temperatur von 29 °C mit Isocyanat Iso1 bei einem Druck von 165 bar und einer Temperatur von 30 °C bei einer Kennzahl von 80 und einem Mischungsverhältnis von 100:61,4 vermischt. 1900 g dieses Reaktionsgemisches wurden bei einer Auftragsleistung von 500 g/s in die Form gegeben und diese Form geschlossen. Nach 5 Minuten wurde die Form geöffnet und das Formteil entformt. Nach Lagerung über Nacht war das Formteil ausreagiert und konnte verarbeitet und getestet werden.

Wärmeleitfähigkeit

$\lambda$ (bei 10 °C) = 30,50 mW/ m*K (Mittelwert aus 2 Messungen)

Druckspannung

σ (bei 10% Kompression) = 23 kPa (Mittelwert aus 5 Messungen)

In beiden Beispielen konnte ein flexibler Formkörper erhalten werden, der zur ZSD geeignet ist.

## Patentansprüche

**1.** Formkörper, umfassend oder bestehend aus

A) einem Hartschaum-Granulat; und
B) einer Weichschaum-Matrix,

**dadurch gekennzeichnet, dass**
der Formkörper eine Wärmeleitfähigkeit von 0,020 bis 0,035 W/(m*K), bestimmt mittels DIN EN 13165:2016-09, aufweist.

**2.** Formkörper gemäß Anspruch 1, **dadurch gekennzeichnet, dass** das Hartschaum-Granulat A) aus einem oder mehreren Polymerschaum-Granulaten besteht ausgewählt aus Polyurethanhartschaumgranulat, Polyisocyanuratschaumgranulat, Phenolschaumgranulat, Polystyrolschaumgranulat, Melaminharzschaumgranulat oder Mischungen davon.

**3.** Formkörper gemäß Anspruch 2, **dadurch gekennzeichnet, dass** das Hartschaum-Granulat A) ein Polyurethanhartschaumgranulat ist, wobei der Polyurethanhartschaum erhältlich ist durch Umsetzung von:

A1 50 bis 100 Gew.-Teilen einer oder mehrerer gegenüber Isocyanaten reaktionsfähige Wasserstoffatome aufweisende Verbindung mit OHZ gemäß DIN 53240:2016-03 von 100 bis 1000 mg KOH/g,
A2 0 bis 50 Gew.-Teilen einer oder mehrerer gegenüber Isocyanaten reaktionsfähige Wasserstoffatome aufweisende Verbindung mit OHZ gemäß DIN 53240:2016-03 von 10 bis 99 mg KOH/g,
A3 bis 10 Gew.-Teilen einer oder mehrerer mit mindestens zwei gegenüber Isocyanaten reaktionsfähigen Wasserstoffatomen aufweisenden Verbindung mit einem Molekulargewicht von 62 bis 399 g/mol, die nicht unter die Definition der Komponente A1 oder A2 fallen,
A4 0 bis 6 Gew.-Teilen Wasser und/oder 1 bis 30 Gew.-Teilen physikalische Treibmittel,
A5 0 bis 40 Gew.-Teilen Flammschutzmittel,
A6 0 bis 20 Gew.-Teilen Hilfs- und Zusatzstoffen wie

a) Katalysatoren,
b) oberflächenaktive Zusatzstoffe,
c) ein oder mehrere Additive, ausgewählt aus der Gruppe bestehend aus Reaktionsverzögerer, Zellregler, Pigmente, Farbstoffe, Stabilisatoren gegen Alterungs- und Witterungseinflüsse, Weichmacher, fungistatisch und bakteriostatisch wirkende Substanzen, Füllstoffe und Trennmittel,

und
B1 Di- oder Polyisocyanaten;

wobei die Summe von A1 und A2 100 Gew.-Teile ergibt und sich die Anteile der Komponenten A3 bis A6 auf 100 Gew.-Teile von A1 und A2 beziehen, und
wobei die Herstellung bei einer Kennzahl von 80 bis 500 erfolgt.

**4.** Formkörper gemäß einem der vorstehende Ansprüche, **dadurch gekennzeichnet, dass** die Weichschaum-Matrix B) eine Polyurethan-Weichschaum-Matrix ist.

**5.** Formkörper gemäß Anspruch 4, **dadurch gekennzeichnet, dass** die Weichschaum-Matrix eine Polyurethan-Weichschaum-Matrix ist, wobei der Polyurethan-Weichschaum erhältlich ist durch Umsetzung von:

A11 mindestens einer gegenüber Isocyanaten reaktionsfähige Wasserstoffatome aufweisende Verbindung mit einer OHZ gemäß DIN 53240:2016-03 von 10 bis 250 mg KOH/g,
A12 gegebenenfalls einem oder mehreren füllstoffhaltigen Polyolen,

A13 0 bis 100 Gew.-Teilen gegenüber Isocyanaten reaktionsfähige Wasserstoffatome aufweisende Verbindung mit einem Molekulargewicht von 62 bis 399 g/mol, die nicht unter die Definition der Komponente A11 oder A12 fallen,

A14 1 bis 25 Gew.-Teilen Wasser und/oder physikalische Treibmittel,

A15 0 bis 30 Gew.-Teilen Flammschutzmittel,

A16 0 bis 20 Gew.-Teilen Hilfs- und Zusatzstoffen wie

> d) Katalysatoren,
> e) oberflächenaktive Zusatzstoffe,
> f) ein oder mehrere Additive, ausgewählt aus der Gruppe bestehend aus Reaktionsverzögerer, Zellregler, Pigmente, Farbstoffe, Stabilisatoren gegen Alterungs- und Witterungseinflüsse, Weichmacher, fungistatisch und bakteriostatisch wirkende Substanzen, Füllstoffe und Trennmittel,

> und
> B2 Di- oder Polyisocyanaten;

wobei die Summe von A11 und A12 100 Gew.-Teile ergibt und sich die Anteile der Komponenten A13 bis A16 auf 100 Gew.-Teile von A11 und A12 beziehen,
wobei die Herstellung bei einer Kennzahl von 70 bis 150 erfolgt.

6. Formkörper gemäß einem der vorstehende Ansprüche, **dadurch gekennzeichnet, dass** das Hartschaum-Granulat in Form von

> a) unregelmäßigen Partikeln vorliegt und/oder
> b) in Form von Polyedern vorliegt,

und/oder das Hartschaum-Granulat einen Durchmesser von 1 bis 300 mm aufweist; und/oder eine Dichte von 10 bis 100 g/L aufweist, bestimmt mittels DIN EN ISO 845:2009-10.

7. Formkörper gemäß einem der vorstehenden Ansprüche, **dadurch gekennzeichnet, dass** die Komponenten A) und B) in einem Masseverhältnis von 10:90 bis 90:10 zueinander vorliegen und/oder A) zu B) in einem Volumenverhältnis von 10:90 bis 90:10 vorliegt.

8. Formkörper gemäß einem der vorstehenden Ansprüche, **dadurch gekennzeichnet, dass** dieser eine spezifische Wärmespeicherkapazität von 1000 bis 2000 J/(kg*K), bestimmt mittels DIN EN 12524:2000-07, aufweist; und/oder dieser eine Rohdichte von 15 bis 100 g/L, bestimmt mittels DIN EN ISO 845:2009-10, aufweist.

9. Formkörper gemäß einem der vorstehenden Ansprüche, **dadurch gekennzeichnet, dass** dieser als diskontinuierlich gefertigte Platte mit einer Länge zwischen 400 und 4000 mm und einer Breite zwischen 200 und 2000 mm vorliegt; oder als kontinuierlich gefertigte Bahn mit einer Breite zwischen 400 und 4000 mm und/ oder eine mittlere Dicke von 10 bis 300 mm vorliegt; oder als Dämmkeil mit einer Länge zwischen 400 und 4000 mm und einer Breite zwischen 200 und 2000 mm vorliegt.

10. Verfahren zur Herstellung eines Formkörpers gemäß einem der Ansprüche 1 bis 9, umfassend die Schritte:

> i) Bereitstellen einer Form,
> ii) Befüllen der Form mit mindestens 10 Volumen-% des Hartschaum-Granulats,
> iii) Umschäumen mit der Weichschaum-Matrix,
> iv) Verschließen der Form bis die Weichschaumreaktion abgeschlossen ist, und
> v) Öffnen der Form und Entformen des Formkörpers.

11. Verfahren zur Herstellung eines Formkörpers gemäß einem der Ansprüche 1 bis 9, umfassend die Schritte:

> i) Bereitstellen des Hartschaum-Granulats,
> ii) Benetzen des Granulats mit der Reaktionsmischung für die Weichschaum-Matrix, und
> iii) Erwärmen der im Schritt ii) erhaltenen Komponente oder kontinuierliches oder diskontinuierliches Pressen der in Schritt ii) erhaltenen Komponente.

**12.** Verwendung des Formkörpers gemäß einem der Ansprüche 1 bis 9 zur thermischen Isolation.

Europäisches
Patentamt

European
Patent Office

Office européen
des brevets

# EUROPÄISCHER RECHERCHENBERICHT

Nummer der Anmeldung

EP 17 18 6298

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2014/128488 A1 (LOTTI LUCA [IT] ET AL) 8. Mai 2014 (2014-05-08) <br> * Anspruch 18 * <br> * Examples; <br> Tabelle 1 * <br> * Absatz [0019] * <br> * Absatz [0020] * <br> * Absatz [0075] * <br> ----- | 1,4-12 | INV. <br> C08G18/48 <br> C08G18/76 <br> C08G18/20 <br> C08G18/30 <br> C08G18/32 <br> C08G101/00 |
| X | WO 2010/146146 A1 (BASF SE [DE]; NEHLS BENJAMIN [DE]; HAHN KLAUS [DE]; KELLER ANDREAS [DE) 23. Dezember 2010 (2010-12-23) <br> * Seite 12, Zeile 36 - Seite 13, Zeile 12 * <br> * Ansprüche 8, 13; Beispiel 4 * <br> * Seite 1, Zeile 13 - Zeile 18 * <br> ----- | 1,4-12 | |
| A,P | Anonymous: "Wärmeleitfähigkeit - Wikipedia", <br> , <br> 9. Januar 2018 (2018-01-09), XP055447618, <br> Gefunden im Internet: <br> URL:https://de.wikipedia.org/wiki/Wärmelei tfähigkeit <br> [gefunden am 2018-02-05] <br> * das ganze Dokument * <br> ----- | 1-12 | RECHERCHIERTE SACHGEBIETE (IPC) <br><br> C08G |

Der vorliegende Recherchenbericht wurde für alle Patentansprüche erstellt

| Recherchenort | Abschlußdatum der Recherche | Prüfer |
|---|---|---|
| München | 5. Februar 2018 | Sütterlin, Martin |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 18 6298

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-02-2018

| Im Recherchenbericht angeführtes Patentdokument | Datum der Veröffentlichung | Mitglied(er) der Patentfamilie | Datum der Veröffentlichung |
|---|---|---|---|
| US 2014128488 A1 | 08-05-2014 | BR 112013033456 A2 | 31-01-2017 |
| | | CN 103608391 A | 26-02-2014 |
| | | EP 2726544 A2 | 07-05-2014 |
| | | ES 2570954 T3 | 23-05-2016 |
| | | JP 6033295 B2 | 30-11-2016 |
| | | JP 2014518299 A | 28-07-2014 |
| | | PL 2726544 T3 | 31-08-2017 |
| | | US 2014128488 A1 | 08-05-2014 |
| | | WO 2013000861 A2 | 03-01-2013 |
| WO 2010146146 A1 | 23-12-2010 | KEINE | |

Für nähere Einzelheiten zu diesem Anhang : siehe Amtsblatt des Europäischen Patentamts, Nr.12/82

EPO FORM P0461

17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015103573 A1
- EP 0000389 A
- EP 0007502 A
- GB 2072204 A
- DE 3103757 A1
- US 4374209 A
- EP 0176013 A
- US 2764565 A

**In der Beschreibung aufgeführte Nicht-Patentliteratur**

- **IONESCU.** Chemistry and Technology of Polyols for Polyurethanes. Rapra Technology Limited, 2005, 55 ff
- Oligo-Polyols for Elastic Polyurethanes. 263 ff
- Polyester Polyols for Elastic Polyurethanes. 321 ff
- Polyether Polyols for Rigid Polyurethane Foams. 419 ff
- Polyester Polyols for Rigid Polyurethane Foams
- Kunststoff-Handbuch. Carl-Hanser-Verlag, 1993, vol. VII, 104-127
- **W. SIEFKEN.** *Justus Liebigs Annalen der Chemie,* vol. 562, 75-136
- Kunststoff-Handbuch. Carl-Hanser-Verlag, 1966, vol. VII, 121-205